# EUROPEAN PATENT APPLICATION

(11) **EP 4 787 369 A1**
(43) Date of publication of application: **05.08.2026**
(21) Application number: 26154456.3
(22) Date of filing: 27.01.2026
(51) Int. Cl.: G10L 15/26, G10L 15/16

(54) **FORM POPULATION AND VERIFICATION BASED ON AUDIO DATA**

(30) Priority: 31.01.2025 US 202519043292
(71) Applicant: Intuit Inc., Mountain View, CA 94043 (US)
(72) Inventor: SYED, Waseem Akram, San Jose (US); KUNINTI, Nishanth Reddy, Fremont (US)
(74) Representative: D Young & Co LLP

(57) **Abstract**

Certain aspects of the disclosure provide systems and methods for audio-based form population and verification. Aspects include requesting and receiving a transcript of audio data associated with a form with a data field and a value associated with the data field, from a speech recognition model, wherein the transcript comprises the words spoken in the audio data; and a pair of timestamps associated with each word spoken in the audio data. Then, the data field is mapped to one or more words spoken in the audio data and used to populate the data field with the value.

## Description

### FIELD AND BACKGROUND

Aspects of the present disclosure relate to techniques to handling audio and video data, including, for use in structured documents.

Various assistive technologies exist to improve functional capabilities of individuals with disabilities. For example, individuals with visual impairments may utilize technologies such as text-to-speech and speech-to-text to read and write. Text-to-speech technologies may scan written text or visuals, such as documents, computer screens, text messages, and the like, and play the text out loud as spoken audio. Speech-to-text technologies operate in reverse, by recording audio and translating the spoken words into text.

Other individuals may utilize these technologies, for example, those with reading difficulties, language barriers, or for convenience. A familiar example is in motor vehicles equipped to read out text-based information and to listen for driver commands. For example, with text-to-speech technology a vehicle may read out caller ID or a text message through the vehicle's sound system. Similarly, the driver may dictate a text message through a microphone associated with the vehicle to be transformed into text and sent.

Conventional text-to-speech and speech-to-text technologies translate the literal words written or spoken between formats. For example, the text generated by a speech-to-text technology may be a transcript, or text embodying the literal words spoken. This may lead to difficulties with natural human speech. For example, homophones may be challenging for speech-to-text technologies. A homophone is a word that sounds the same as another word but has a different meaning, and sometimes a different spelling. For example, "two", "too", and "to" are homophones with different meanings. "Two" references the number 2, while "too" means also, and "to" is a preposition. Spoken, each of these words sounds the same, but each has different meanings and spellings. Thus, the speech-to-text technology needs to differentiate between which word is used, for example, based on the context, and still sometimes may transcribe the incorrect word in the transcript.

A similar technical challenge for text-to-speech technologies are heteronyms. Heteronyms are words that have the same spelling, but are pronounced differently based on meaning or usage. For example, "wind" can be used as a noun to mean moving air and may be pronounced "wihnd," while used as a verb to mean to twist or turn and may be pronounced "wynd." Other challenges may include slang, accents, or other pronunciation variations.

### SUMMARY

Particular aspects are set out in the appended independent claims. Various optional embodiments are set out in the dependent claims.

Certain aspects provide a method, comprising: receiving an audio data associated with a form, wherein the form comprises a data field and a value associated with the data field; requesting a transcript of the audio data from a speech recognition model; receiving, from the speech recognition model, the transcript of the audio data, the transcript comprising: a plurality of words spoken in the audio data; and a pair of timestamps associated with each word of the plurality of words spoken in the audio data; mapping the data field to one or more words of the plurality of words spoken in the audio data; and populating the data field with the value based the one or more words of the plurality of words and the timestamp associated with each of the plurality of words spoken in the audio data.

Certain aspects provide a method, comprising: receiving audio data associated with a structured document, wherein the structured document comprises a data field and a set of possible values associated with the data field; requesting a transcript of the audio data from a first machine learning model; receiving, from the first machine learning model, the transcript of the audio data, the transcript comprising: a set of words spoken in the audio data; and a pair of timestamps associated with each word of the set of words spoken in the audio data; generating, with a second machine learning model, a structural contextual output comprising a mapping of the data field to a value, wherein the value is based on one or more words of the set of words spoken in the audio data; populating the data field with the value; generating an audio segment associated with the data field; and verifying the value based on the audio segment.

Other aspects provide processing systems configured to perform the aforementioned methods as well as those described herein; computer-readable media comprising instructions that, when executed by a processors of a processing system, cause the processing system to perform the aforementioned methods as well as those described herein; a computer program product embodied on a computer readable storage medium comprising code for performing the aforementioned methods as well as those further described herein; and a processing system comprising means for performing the aforementioned methods as well as those further described herein.

The following description and the related drawings set forth in detail certain illustrative features of one or more aspects.

### DESCRIPTION OF THE DRAWINGS

The appended figures depict certain aspects and are therefore not to be considered limiting of the scope of this disclosure.
**FIG. 1** depicts an example system for audio based form population and verification.
**FIG. 2** depicts an example workflow for audio based form population and verification.
**FIG. 3A** depicts an example of audio data.
**FIG. 3B** depicts an example prompt for a first machine learning model to transcribe the audio data.
**FIG. 3C** depicts an example transcript of the audio data received from the first machine learning model.
**FIG. 3D** depicts an example prompt to a second machine learning model to generate data for form population based on the transcript of the audio data.
**FIGS. 3E-3F** depict an example schema for use by the second machine learning model, specifically, **FIG. 3E** depicts a first portion of the example schema and **FIG. 3F** depicts a second portion of the example schema.
**FIG. 3G** depicts an example response from the second machine learning model with the data for form population.
**FIG. 3H** depicts an example form populated based on the audio data.
**FIG. 4** depicts an example method for audio-based form population.
**FIG. 5** depicts an example method for audio-based form population and verification.
**FIG. 6** depicts an example processing system with which aspects of the present disclosure can be performed.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums with instructions for audio-based data assistive techniques configured for handling audio and video data, including, for use in structured documents.

As described herein, audio-based data assistive technologies provide audio-based support to enhance accessibility and communication to convey information that would otherwise be visual, and enable users to interact with devices, navigate environments, or access content more effectively. Additionally, audio-based data assistive techniques described herein may provide convenient access for various use cases, including hands-free use, audio and visual feedback, and the like.

Like heteronyms, homophones, slang, accents, or other pronunciation variations, another technical challenge with audio-based data technologies is data handling. Data handling refers to techniques for collecting, organizing, managing, processing, and/or analyzing data, such as gathering raw data to present it in a useful format for analysis and/or dissemination. In some cases, data handling includes data extraction and structuring, such as to extract and convert data into a usable format for further analysis, reporting, and/or storage, among other tasks.

Structured data may be contained in structured documents, which may have a predefined format in which data is organized in a consistent way making it easy to store, search for, and/or extract. Example structured documents may include forms (e.g., such as electronic forms), spreadsheets, JavaScript Object Notation (JSON) objects, extensible markup language (XML) documents, and more. Unstructured documents, in contrast, may lack a pre-defined structure or format. For example, data included in an unstructured document may not follow any specific template and/or schema.

Unstructured documents may include a variety of data types (e.g., such as text, images, multimedia, etc.), and often include content that is free-form or narrative. Data included in unstructured documents may be referred to herein as "unstructured data." Example unstructured documents may include letters, memos, or essays, other free form documents, images, audio files, video files, social media posts, emails, and more. Structured documents may be easier to categorize and search as compared to unstructured documents, which may require more complex analysis techniques to extract meaningful information.

Structured documents pose several challenges for audio-based data assistive technologies. For example, consider a form. As used herein, a "form" is an example of a structured document consisting of multiple data fields, or designated spaces for entering or selecting specific data (e.g., values). Forms are often associated with templates, which provide the pre-defined structure or layout that organizes the data fields within the form. In other words, a form template may be a blueprint for creating a particular form, ensuring consistency, standardization, and/or efficiency in data collection. Forms may be physical or electronic. Form population refers to a process for entering information into a form, such as by populating in one or more fields of the form with pre-existing data.

The existing data that is entered into a form may include unstructured or structured data extracted from various sources, including audio data. The audio to text transcription process for populating forms, as well as the reverse process of converting text in forms to audio data, is subject to all of the aforementioned technical challenges, as well as additional technical challenges associated with structured data, which often relies on visual and/or spatial relationships to help encode the structure.

One issues is that a text-to-speech reading of a form may not adequately describe the structure or layout of the form, to ensure the form is properly filled. For example, a form for user information may include data fields of first name, last name, address, and telephone number. The audio reading of the form may literally read: "first name last name address telephone number," which, without the visual context of the form, may be confusing and/or inadequate to obtain the data to fill the form.

Similarly, users typically speak in a narrative or otherwise unstructured style. For example, a user may state "my name is Tom Parker." While this sentence contains the user's first name and last name, the relationship between the spoken words and those data fields of a form, e.g., the first name data field and the last name data field, is unclear strictly from the spoken words, e.g., what is the user's first name and what is the user's last name. This spoken sentence contains information tied to two data fields and the information may get duplicated into both data fields, skipped in the second data field, or otherwise result in inaccurately associating the information with the correct data field.

Another challenge with narrative style is that information may be contextual or inferred and not directly tied to any specific spoken word. For example, for a telephone section, the user may state, "I can be reached at (650)-944-6-triple 'O'." By that, the user means (1) that this is their telephone number (as indicated by the pattern of numbers because it follows a United States telephone number format) and (2) the last three digits of their telephone number are three zeros. This information is not explicitly stated or written in the transcript, but can be inferred based on the context and informal style used.

Thus, even with an accurate transcript of audio data, a system may struggle to accurately identify and extract relevant data consistently from the unstructured transcript. In some cases, this may be due to data ambiguity since an unstructured transcript may contain text with varied sentence structures, slang, and/or multiple meanings, making it difficult for algorithms to interpret correctly. Additionally, contextual understanding by software may be required to extract relevant data, as the meaning of information may change depending on the surrounding context. Furthermore, an unstructured transcript may contain noise, such as irrelevant details and/or formatting inconsistencies, which may need to be handled during the extraction.

Aspects described herein overcome the aforementioned technical problems and improve on the state of the art by providing an automated solution for audio-based data handling, which uses natural language processing (NLP) techniques to extract audio information for electronic form population. For example, automated methods of form-population may use software to transcribe audio data, automatically identify and extract relevant information from the transcribed audio data, and then populate that data directly into the designated data field(s) of an electronic form. In some aspects, a handler (e.g., a function, a method, a block of code, an application programming interface (API), etc.) may utilize a speech recognition machine learning model to transcribe audio data into an unstructured transcript, and generate, based on the unstructured transcript, with a language model, a structured output in compliance with a schema. The handler may subsequently use the structured output to populate the electronic form with the information captured in the audio data.

As used herein, a schema may refer to a structured framework that specifies the entities and structure of a particular electronic form, such as the data fields (e.g., the individual entities of the form) included in the form, as well as possible values for each data field, including value types (e.g., data types and/or formats), default values, constraints (e.g., limits on values), rules, and/or other properties. A schema may thus be used to guide a model in the extraction and generation of a structured output, which may be subsequently used to populate the electronic form. That is, the structured output generated based on the schema may include data fields and values that conform to the rules and/or structure of the schema, making it easy to process and use this information for population of the electronic form.

For example, audio data may be captured from a user and transcribed as an unstructured transcript, in some aspects, using a machine learning model, such as a speech recognition model. The unstructured transcript (e.g., relative to the form), and the schema may be used by a machine learning model, such as a language model, to generate a structured output conforming to the structure of the form, and including information for populating the form based on the captured audio. Then, the form may be populated based on the structured output.

The audio-based data assistive techniques described herein thus use improved data extraction and form population techniques to improve audio-based form population, thereby providing a technical solution to the aforementioned technical problems. For example, data may be efficiently extracted from audio data and transformed into a structured format, such that it may be used to populate a form. Specifically, by using a speech recognition model to transcribe the audio data and identify a timestamp for each spoken word, the audio data may be transformed into a format usable by a language model to map the spoken word(s) to the data field(s) of the form. The speech recognition models described herein beneficially transcribe spoken word, even with accents, slang, noise, and other inconsistencies through NLP techniques and training on a variety of data, thereby improving extraction of data from the audio.

Further, the language model utilizes the transcript from the speech recognition to map the extracted data to data fields of the form, even when the extracted data does not explicitly recite a relationship to the corresponding data field. For example, the language model described herein utilizes contextual relationships, the schema associated with the form, and summarization techniques to inference the mapping between the audio and the data field. Thus, beneficially, the audio data does not need to explicitly recite each value for entry into the data field (e.g., compared to conventional text-to-speech systems only transcribing the exact words spoken).

Additionally, such techniques described herein may utilizes narrative speech (e.g., conversational), to populate forms, thus, not requiring explicit user interaction with the form to populate the form and provide accurate data. For example, audio data comprising narrative speech may be mapped to one or more data fields and to generate the structured output conforming to the structure of the form. Moreover, a value for a data field may be inferred based on the audio data, for example, narrative speech, to generate the entry for the data field conforming to the schema. Thus, a greater variety of audio data may be utilized (e.g., conversations, or narrations). Further, audio data may be utilized which was not generated specifically for the form (e.g., prior recorded audio data) because the techniques described herein enable inferencing of form values without explicit statement or direction in the audio data. Also, audio data may be utilized to populate multiple forms because the audio data is not tied to a specific form, such as through explicit statement or direction.

Furthermore, aspects described herein also provide a verification method for forms populated based on audio data. Specifically, verification methods described herein enable audio playback of an audio segment used to generate the value for a data field in a form. Thus, a user may beneficially verify the value entered for the data field based on a replay of the relevant segment of audio used to generate the value. In some aspects, the structured output generated by the language model may include timestamp references to the relevant segment of the audio, enabling precise playback of the audio segment for verification based on the timestamps. This verification process may further provide a mechanism for a user to flag an incorrect transcription so that the system may be modified for improved performance (e.g., by retraining or fine-tuning any underlying models).

The audio-based data assistive techniques described herein can generally improve the function of any existing application that utilize electronic forms and/or structured data. For example, the techniques may be used to improve the speed and accuracy of data extraction from audio data, which may in turn improve the speed and accuracy of populating electronic forms, which may be used by the application to perform subsequent tasks. Furthermore, the timestamped audio segments enable quick and easy verification of the audio data used to determine values for the form.

### Example System for Audio based Form Population and Verification

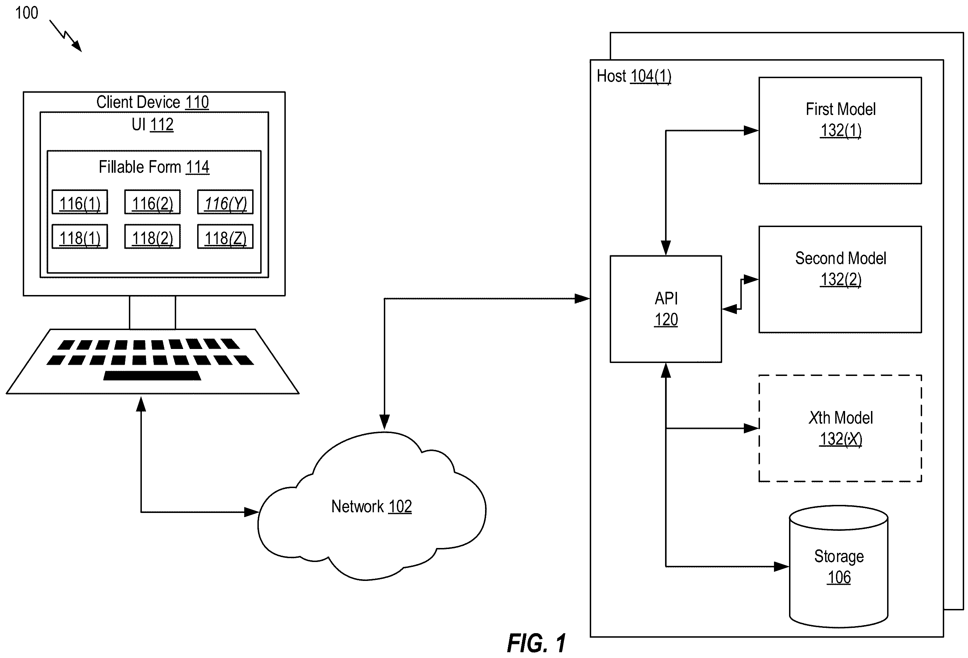

FIG. 1 depicts an example system 100 for populating a form based on audio data and verifying the populated form. In this example, system 100 has an artificial intelligence (AI) field narration service implemented as a software-defined service (e.g., in some cases, a cloud-native software-defined services). Specifically, in this example, the AI field narration service is implemented as an API, and referred to herein as API 120, however, other services are possible, for example, AI field narration service may be implemented as a microservice, and may be deployable as part of, integrated with, coupled to, or otherwise configured to function with an application. It should be understood that the components of system 100 depicted in **FIG. 1** and described herein are merely examples and systems with additional, alternative, and/or a fewer number of components may be considered within the scope of this disclosure.

In the example depicted in **FIG. 1****,** system 100 comprises a client device 110 and host(s) 104 interconnected through a network 102. Network 102 may be, for example, a direct link, a local area network (LAN), a wide area network (WAN), such as the Internet, another type of network, or a combination of one or more of these networks.

Host(s) 104 may be geographically co-located servers on the same rack or on different racks in any arbitrary location in a data center. Host(s) 104 may be constructed on a server grade hardware platform and include components of a computing device such as, one or more processors (central processing units (CPUs)), one or more memories (random access memory (RAM)), one or more network interfaces (e.g., physical network interfaces (PNICs)), storage 106, and other components (e.g., only storage 106 is shown in **FIG. 1**).

A first host 104(1) in system 100 may host a plurality of services, including API 120, and one or more machine learning models 132(1)-(X) (collectively referred to herein as "machine learning models 132"), where *X* is an integer greater than one. Further, while depicted as separate models, aspects performed on one machine learning model may be performed on another machine learning model 132. The services may be deployed using virtual machines (VMs) and/or container(s) running on first host 104(1) (e.g., where first host 104(1) is running a hypervisor (not shown) used to abstract processor, memory, storage, and networking resources of first host 104(1)'s hardware platform).

Although depicted here as hosted on first host 104(1), one or more of the machine learning models 132 may be hosted on a separate host e.g., host(X). In some aspects, one or more of the machine learning models 132 may be hosted on a different data center, and connected to host 104(1) and/or client device 110 through network 102. In some examples, communication between the machine learning models 132 and the API 120 may be facilitated by one or more additional APIs.

Client device 110 may each include a user interface (UI) 112 which may be used to communicate with, at least, the API 120 using the network 102. In some examples, communication between client device 110 and the API 120 may be facilitated by one or more additional APIs. Examples of client devices 110 may include a smartphone, a personal computer, a tablet, a laptop computer, and/or other devices.

The UI 112 further includes a display of a form 114. The form comprises one or more data fields 116(1)-(Y) (collectively referred to herein as "data fields 116"), where *Y* is an integer greater than one, and one or more values 118(1)-(Z) (collectively referred to herein as "values 118"), where Z is an integer greater than one. Each data field 116 of form 114 is associated with one value 118. Although described herein as a form, the form 114 may comprise any structured document with a data field and a value, where the value may be populated with data obtained from audio data.

Further, in some aspects, the UI 112 may include one or more audio capture devices (not depicted). An audio capture device may comprise a microphone or other device configured to capture audio (e.g., sound), and record the audio as digital audio data. In some aspects, the UI 112 may include one or more audio players configured to play audio (e.g., as sound) from digital audio data.

In some aspects, and as described further herein, the API 120 may be configured to utilize audio data (e.g., captured by an audio capture device), and populate form 114 by populating the value(s) 118 associated with the data field(s) 116 of the form based on information captured in the audio data.

For example, in some aspects, the API 120 may be configured to utilize one or more machine learning models 132 to transcribe the audio data, and generate, based on the transcription, the values 118 for populating the form 114. Furthermore, in certain aspects, the API 120 may generate audio segments containing the portion of the audio data conveying the values 118, in order that a user may verify the populated form.

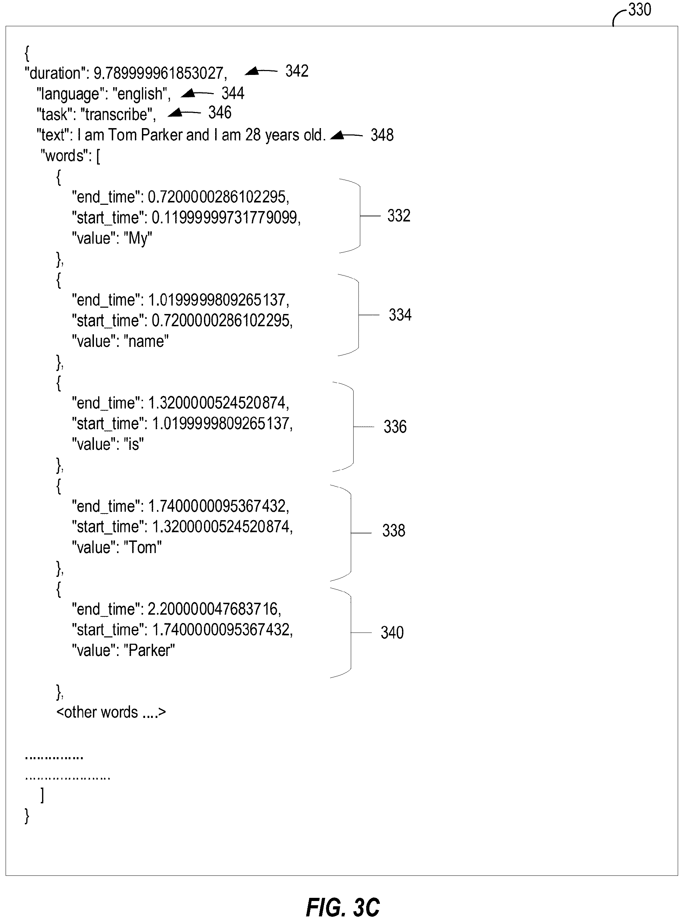

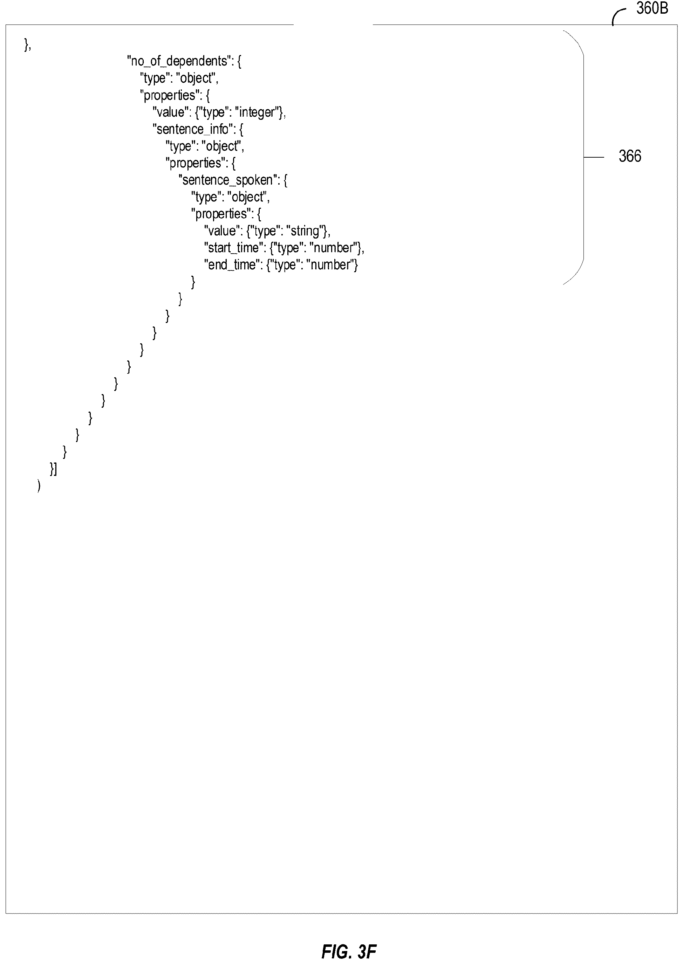

In some aspects, a first machine learning model, e.g., first model 132(1), may comprise a speech recognition model configured to transcribe audio data into a transcript of the words spoken in the audio data. For example, the first model 132(1) is configured to received audio data, from the API 120 e.g., captured through an audio capture device associated with a user device, or otherwise obtained by the API 120. The first model 132(1) is configured to generate a transcript of the audio data. In aspects, the transcript comprises the words spoken in the audio data and a pair of timestamps for each word spoken. In some aspects, the transcript is unstructured relative to the form 114, that is, the information contained in the transcript is not in an initial organization or structure usable to populate the form 114. FIG. 3C, described further below, depicts an example transcript 330.

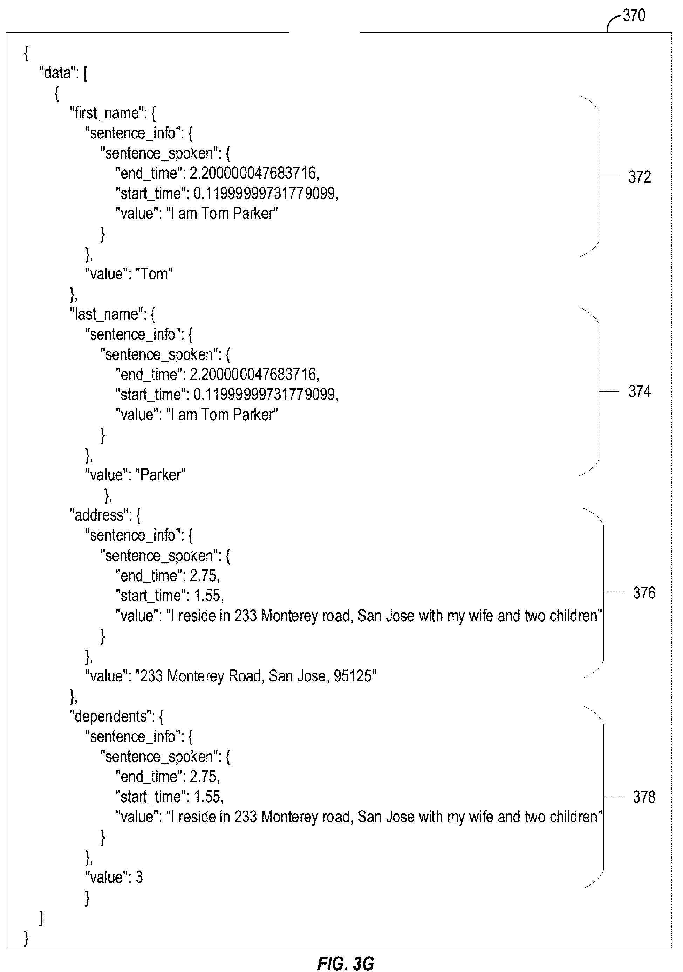

In some aspects, a second machine learning model, e.g., second model 132(2) is configured to generate a structured contextual output of the transcript organized in a structure usable to populate the form 114 (e.g., fill the values 118 for each data field 116). **FIG. 3G****,** described further below, depicts an example response 370. The structured contextual output is organized in a structure usable to populate the form 114, including a value 118 for each data field 116 of the form 114. Thereby, the information captured in the audio data may then be used to populate the form 114. In some aspects, the second model 132(2) is configured to process the transcript, organize the spoken words into word segments, where each word segment comprises a contextual grouping of words conveying information, e.g., relative to one or more data fields 116, for example, a sentence, clause, or phrase. In some aspects, a word segment may comprise a sentence or part of sentence conveying information. In some aspects, word segments may also be referred to as contextualized word segments or context-based word segments. The word segments and a schema associated with the form 114 may be analyzed by the second model 132(2), or in some aspects, another model 132(X), to infer the information for a data field 116 (e.g., the information used to generate a value 118) based on the word segment. Furthermore, in some aspects, a set of timestamps associated with the word segment may be assigned, where the timestamps correspond to a segment of the audio data containing the word segment. The structured contextual output may then be used to populate one or more values 118 of the form 114.

The data extraction and form population techniques described herein enable audio-based form population, including data extraction from audio data (e.g., unstructured data), and data entry to populate electronic forms. These audio-based data extraction and electronic form population techniques further improve upon assistive technologies, e.g., speech-to-text, for form population by enabling narrative (e.g., unstructured) audio-based form population. Additionally, such techniques described herein may enable passive form population, without requiring explicit user interaction with the form to populate the form and provide accurate data.

Furthermore, in some aspects, a value 118 of the form 114 may be verified by playing (e.g., with an audio player associated with UI 112), a segment of the audio data conveying the information for the value 118. For example, based on the timestamps assigned to the word segment associated with the value 118.

### Example Workflow for Populating a Form Based on Audio Data

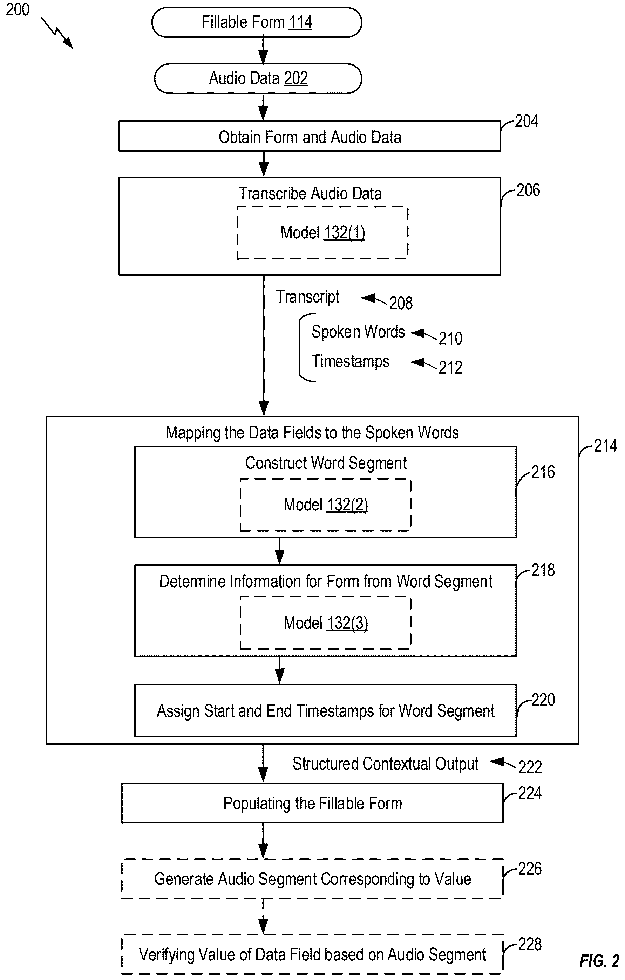

FIG. 2 depicts an example workflow 200 for populating a form based on audio data, for example, using system 100 described in FIG. 1. Specifically, workflow 200 may be used to extract textual data from audio data and populate an electronic form (e.g., form 114 in **FIG. 1**) based on the extracted textual data. Although workflow 200 describes the population of a single electronic form, in other examples, workflow 200 may be used to populate multiple electronic forms from the extracted data. Additionally, it is noted that various types of electronic forms may be populated, for example, an electronic contact information form, an electronic tax form, an electronic health form, an electronic invoice, an electronic bill, and/or other electronic form types. Further, although workflow 200 describes the population of a form based on audio data, in some aspects, the audio data may be associated with a video, for example, video data containing both image and audio data.

Initially, a fillable form (e.g., form 114 in **FIG. 1**) is identified, for example, based on a form displayed on the client device 110 displaying UI 112. In some aspects, the form 114 may be identified based on an identifier indicating the form to be populated by workflow 200.

At step 204, the audio data 202 for populating form 114 is obtained, for example, by the API 120. In some aspects, workflow 200 includes recording the audio data, for example, through an audio capture device associated with the user device displaying the UI 112. In some aspects, the audio data 202 may be recorded via an audio capture device associated with a user device (e.g., client device 110), for example, through a microphone, through a camera, and/or the like. In some aspects, the audio data 202 is recorded on another device and obtained for processing by workflow 200, for example, by another device connected to system 100 through network 102. In some aspects, the audio data may be stored in storage 106.

The audio data 202 contains information for populating a fillable electronic form. In some aspects, the audio data comprises a narrative or conversation, for example between a user and a virtual agent. In some aspects, the information contained in the audio data 202 is not explicitly responsive to data fields of the form. For example, a form may comprise a data field for "dependents" and the corresponding audio data may describe the speaker's wife and two children, whereby the value for the data field is "3." Through system 100, for example, using API 120, the information contained in the audio data may be transformed into value(s) to populate the form 114.

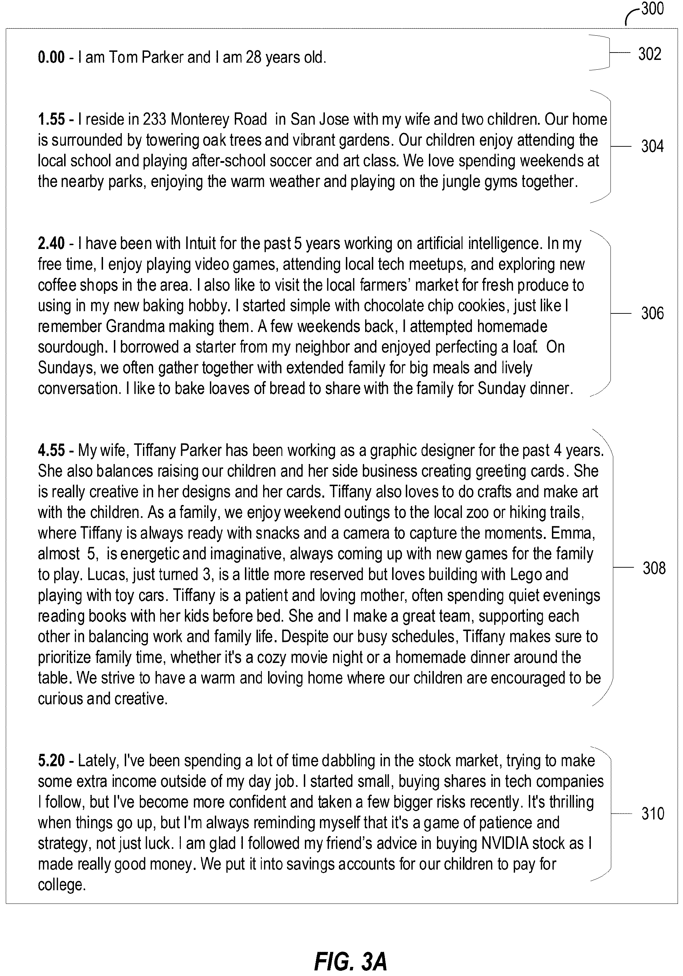

**FIG. 3A** depicts an example of audio data 300. The example audio data 300 includes several portions, first portion 302, second portion 304, third portion 306, fourth portion 308, and fifth portion 310. For illustrative purposes, audio data 300 is depicted in text format, however, audio data is stored as digital audio data in an audio coding format. The audio data may be stored in variety of formats, for example, WAV, AIFF, PCM, FLAC, APE, WavPack, TTA, ATRAC, ALAC, MPEG-4, WMA, SHN, Opus, MP3, Vorbis, Musepack, and the like. In the example of **FIG. 3A****,** the speaker describes himself and his family in a narrative, unstructured manner, e.g., relative to the form 114.

Returning to **FIG. 2****,** at step 206, the audio data 202 is transcribed to generate a transcript 208 comprising a plurality of words spoken 210 in the audio data 202, and a pair of timestamps 212 associated with each word of the plurality of words spoken in the audio data 202.

The transcript 208, in some aspects, may comprise a structured response, such as a JSON output. The transcript may include text embodying the one or more words spoken in the audio data. For example, audio data may include the following spoken words: "My name is Tom Parker." The transcript 208 may include text of the spoken words 210 in the audio data 202. Furthermore, the transcript 208 includes a pair of timestamps 212 associated with each word of the spoken words. The pair of timestamps 212 may include a start timestamp corresponding to the time point of the audio data in which the spoken word begins, and an end timestamp corresponding to the time point of the audio data in which the spoken word ends. For example, for each of the words "my name is Tom Parker," a pair of timestamps may be assigned, e.g., a first pair of timestamps associated with "my," a second pair of timestamps associated with "name," a third pair of timestamps associated with "is," a fourth pair of timestamps associated with "Tom," and a fifth pair of timestamps associated with "Parker."

In some aspects, a machine learning model 132(1) may be utilized to transcribe the audio data 202. In some aspects, the API 120 sends a request to the machine learning model 132(1), requesting the machine learning model 132(1) to transcribe the audio data 202. The machine learning model 132(1) then returns the transcript 208.

In some aspects, the machine learning model 132(1) comprises a speech recognition transformer model. In some aspects, the speech recognition model may be based on a transformer architecture (e.g., architecture that uses an encoder-decoder structure to generate an output). Audio data is provided as input to the machine learning model 132(1) and split into time-based chunks (e.g., chunks of a duration of 15 seconds, 30 seconds, 45 seconds, etc.), and the chunks converted into a log-Mel spectrogram. Then, the log-Mel spectrogram is passed to an encoder to encode it into a form for processing by the decoder such that a decoder can process it. The decoder is trained to predict a text caption (e.g., transform the spoken words into text embodying the literal spoken words), and the decoder perform tasks such as language identification, word and phrase-level timestamps, multilingual speech transcript, and to-English speech translation. Examples of speech recognitions models include "Whisper" produced by OpenAI^{®} of San Francisco, California and "Gemini" produced by Google LLC^{®}.

The machine learning model 132(1) may be trained on a diverse set of speech patterns, enabling transcription of a variety of spoken languages, dialects, accents, slang or informal language, and the like into the transcript 208.

In some aspects, the transcript 208 further includes an indication of the duration of the audio data 202, e.g., a duration of time of the spoken words in the audio data 202. In some aspects, the transcript 208 further includes an indication of the language of the text of the transcript.

In some aspects, the transcript 208 may include a translation of the words spoken, for example, a translation of words spoken in Spanish to English. In some aspects, the translation may be based on a characteristic of the form, for example, an expected language of the form, and the like.

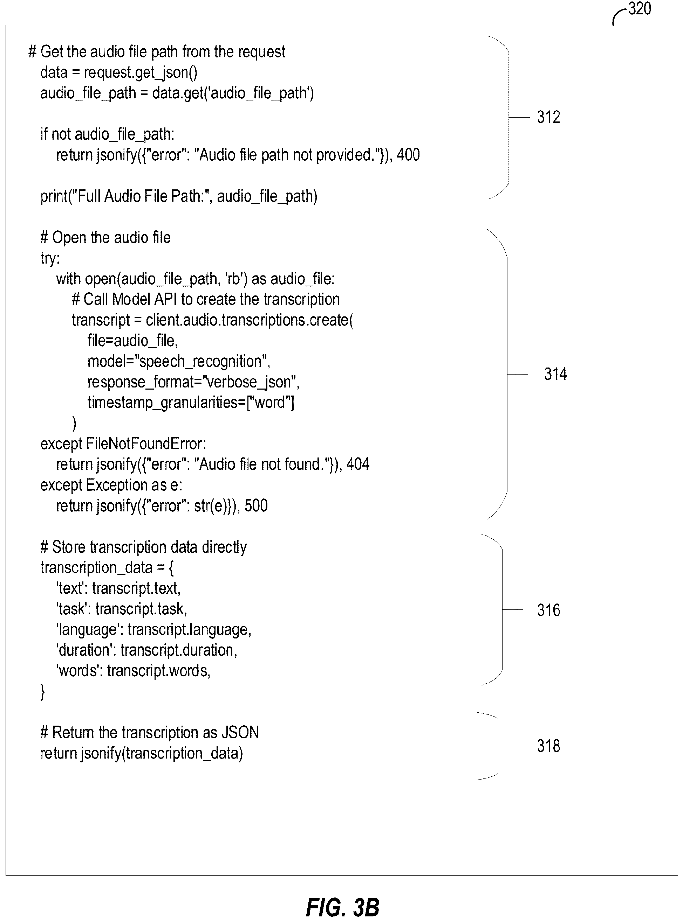

**FIG. 3B** depicts an example prompt 320 to the machine learning model 132(1) to transcribe the audio data 300 of **FIG. 3A****.** Specifically, example prompt 320 includes a first instruction 312 to obtain the audio data 300. Example prompt 320 further includes a second instruction 314 to transcribe the audio data 300, in this example, by calling an API associated with the model to create the transcription, specifying the model for, and specifying the response. Specifically, in this example, the response from the model 132(1) is in a JSON format with timestamps as to each word of the audio data 300. Further, example prompt 320 includes a third instruction 316 to also include additional transcription information, including the text of the audio data 300, the task the model 132(1) completed, the language of the transcript, and each word in the transcript. Fourth instruction 318 of the example prompt 320 specifies the response from the model 132(1) is to be returned in a JSON format.

**FIG. 3C** depicts an example transcript 330 for the audio data 300 in **FIG. 3A****,** based on the example prompt 320 in **FIG. 3B****.** Transcript 330 includes a plurality of words spoken in the audio data 300. For illustrative purposes, only a subset of the plurality of words spoken in audio data 300 is depicted, however, each word spoken in the audio data 300 generally may be part of transcript 330. In this example, the depicted plurality of words spoken in audio data 300 include a first word 332, a second word 334, a third word 336, a fourth word 338, and a fifth word 340. In this example, first word 332 is "My" and has a start time of 0.11999999731779099 of the audio data 300, and an end time of 0.7200000286102295. The second word 334 is "name" and has a start time of 0.7200000286102295 and an end time of 1.0199999809265137. The third word 336 is "is" and has a start time of 1.0199999809265137 and an end time of 1.3200000524520874. The fourth word 338 is "Tom" and has a start time of 1.3200000524520874 and an end time of 1.3200000524520874. The fifth word 340 is "Parker" and has a start time of 1.7400000095367432 and an end time of 2.200000047683716.

In some examples, transcript 330 may include additional information related to the audio data 300, for example, a total duration of the audio data 342, a language of the transcript 344, the task performed by the machine learning model 132(1) 346, and the complete text 348.

Although the transcript 330 is in a structured format (JSON) in this example, the structure of the transcript 330 does not align with the structure of the form 114. Accordingly, the form 114 cannot be directly populated with the transcript 330.

Returning to **FIG. 2****,** at step 214, the data fields 116 of the form 114 are mapped to the spoken words 210. In some aspects, each data field 116 of the form 114 is mapped to one or more spoken words 210 of the transcript 208.

In some aspects, mapping a data field to one or more spoken words 210 of the transcript 208 comprises constructing a word segment comprising one or more words of the spoken words 210 at step 216, determining the word segment contains information related to the data field at step 218, and assigning a start timestamp to the first word of the word segment and an end timestamp to the last word of the word segment at step 220.

For example, the "first name" data field (e.g., one of data fields 116) is mapped to the segment of the audio data 202 which contains the user's first name and determine the value (e.g., the value 118 corresponding to the data field 116) for populating the "first name" data field, e.g., the user's first name, Tom. In some cases, the segment of the audio data 202 may directly (e.g., explicitly) contain the information for the value. For example, a user stating their first name for the "first name" data field, e.g., "my first name is John." In some cases, however, the segment of the audio data may indirectly (e.g., not explicitly) contain the information for the value. For example, the user may state "I live in Mountain View with my wife and three kids." A value for a "marital status" data field may be inferred from the segment of the audio data, that the user is married because the user has a wife, even though the user does not explicitly state "My marital status is married." By inferring values for data fields, the audio data need not explicitly correspond to the data fields of the form. Further, the audio data may be used for a variety of forms, and is not tied to a specific form or structure.

At step 216, a word segment comprising one or more words of the spoken words 210 may be constructed. In some aspects, the word segment is constructed with a machine learning model 132(2). For example, in some aspects, the machine learning model 132(2) comprises a language model, such as a large language model (LLM). A language model is a type of machine learning the model that supports NLP tasks, such as generating text, analyzing sentiments, answering prompts (e.g., specific instructions and/or requests posed in natural language) in a conversational manner, translating text from one language to another, and/or the like. Language models make it possible for software to "understand" typical human speech or written content and respond to it by, in some cases, generating human-understandable responses through natural language generation (NLG).

In some aspects, the machine learning model 132(2) may be prompted to construct one or more word segments based on the transcript 208, where each word segment contains contextual information associated with at least one data field (e.g., data field 116). The machine learning model 132(2) returns a contextual output comprising the word segment(s) based on the prompt. The machine learning model 132(2) may utilize NLP to determine the word segment(s) of the transcript, including contextual analysis to consider the context, e.g., the words surrounding around each word, to determine related words and form the word segments.

A word segment may be constructed, for example, based on a contextual or semantic relationship between one or more words in the transcript. For example, "is" is a verb linking "my name"," the speaker as the subject, to "Tom Parker" the subject complement. Thus, "my name is Tom Parker" may be determined to be a word segment, e.g., sentence or part of a sentence with contextual information, the speaker's name. Further, a word segment may be constructed based on a location and relationship between the words, for example, based on a chunk of semantically or lexically related words of the transcript, an order of the words of the transcript, punctuation of the transcript, and the like.

At step 218, the word segment is determined to convey information related to a data field 116 of the form 114. A schema associated with the form 114 is determined, for example, based on the type of form 114. A plurality of schemas may be defined for a plurality of forms, each schema defining the different data fields and different structures associated with each form. For example, a first set of data fields and a first structure may be defined in a first schema associated with an electronic contact information form, while a second set of data fields and a second structure may be defined in a second schema associated with an electronic tax form. Furthermore, each schema includes rules, constraints, default values, and/or other properties associated with the form.

For example, a schema associated with an electronic contact information form may include a name, a street address, a city, a state, a zip code, a telephone number, and an email address, data fields.

As another example, a schema associated with an electronic tax form may include a name, a social security number, a number of dependents, a taxpayer status, a taxable income, and a deductible data fields.

Other schemas including additional, or fewer fields are possible, and may be associated with a variety of forms. Schemas may be stored in storage 106, and accessed by the API 120.

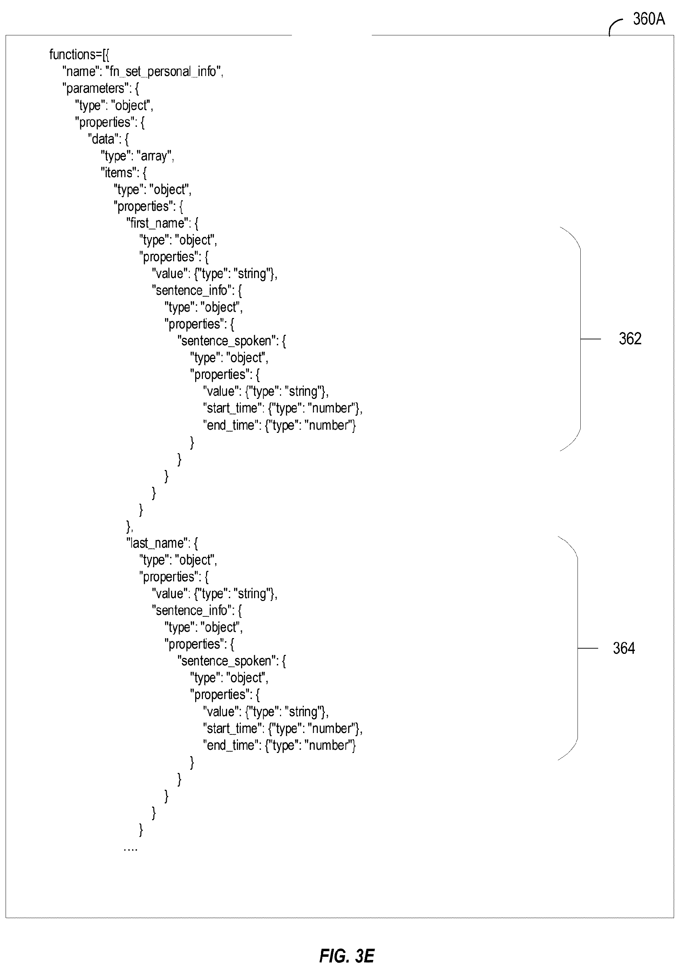

**FIGS. 3E-3F** depict an example schema, first portion 360A and second portion 360B, collectively, schema 360. Schema 360 in this example, is for a form about personal info. Schema 360 includes a first set of information 362 regarding a first name data field, including the value for the data field is a string, to identify the sentence embodying that information with the words spoken, and the start timestamp and the end timestamp. Similar sets of information for other data fields of the form include second set 364 regarding a last name data field, and third set 366 regarding a number of dependents.

In some aspects, the word segment and schema are processed by a machine learning model 132(3) to determine the information conveyed and relationship to a value for a data field of the form 114. For example, the machine learning model 132(3) may be prompted to generate a structured output, based on the schema and word segment, comprising a data field, a word segment conveying information for the data field, and a value for the data field, the value representing the information conveyed by the word segment. The machine learning model 132(3) then generates the output based on the prompt.

For example, the word segment "I live with my wife and two kids" may be determined to comprise information related to the marital status data field, and the value may be determined to be "married" based on the word segment, and the schema associated with the form. As described herein, a schema may include rules, constraints, possible values, and the like, for a data field of the form. In this example, the marital status data field may be defined to contain possible values of "single", "married", "divorced", and "widowed", whereby the value for the data field is selected from one of the possible values. In other examples, the possible values for a data field may be selected from a list of possible values (like the example marital status data field), unstructured text, structured text (e.g., a street address), a numerical value (e.g., a number), a structured numerical value (e.g., a date or telephone number), and/or the like. The rules and constraints of the schema may facilitate determination of the value from possible values. For example, for the marital status field, a rule may describe "married" as legally married where the user is not divorced, and their spouse is living, thus, based on the word segment "I live with my wife and two kids" indicates the user is not divorced and their wife is living.

At step 220, a start and end timestamp are assigned to the word segment based on the transcript 208. Specifically, the first word of the word segment in the transcript may be identified and the start timestamp of the first word of the word segment may be assigned as the start timestamp of the word segment. The last word of the word segment in the transcript may be identified and the end timestamp of the last word of the word segment may be assigned as the end timestamp of the word segment.

In some aspects, the machine learning model 132(2) and the machine learning model 132(3) are the same model, and may be prompted with a prompt comprising both the instruction to generate word segments, and determine the information conveyed by the generated word segments, as well as associated timestamps. For example, the machine learning model 132(2) may be configured to process the transcript 208 and the schema to generate the word segment(s), infer the value(s) for the data field(s) of the form, and assign the set of timestamps to generate a contextual output including the value(s) for the data field(s) (e.g., as a structured output), the transcript of the segment of the audio data comprising the spoken words from which the value is derived, and the set of timestamps of the segment of the audio data 202. The machine learning model 132(2) may then output a structured contextual output 222 comprising the word segments, the values for the data fields, and the set of timestamps of the segment of the audio data.

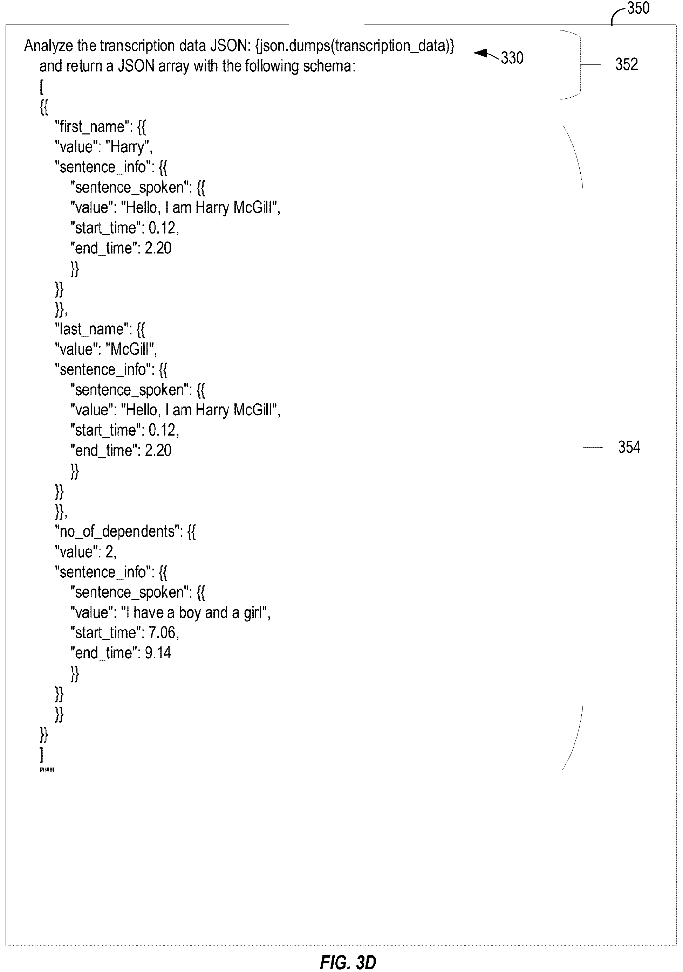

**FIG. 3D** depicts an example prompt 350 for a machine learning model comprising an instruction 352 to generate word segments, to determine the information conveyed by the generated word segments, and to determine associated timestamps. Example prompt 350 includes an instruction to the machine learning model to analyze the transcript 330 and to return a JSON array according to the schema 354. The schema 354 includes example data for the model 132(2) to utilize in generating the structured contextual output 222.

**FIG. 3G** depicts an example response 370 from the machine learning model. In some aspects, the response 370 is a structured contextual output. The structured contextual output includes a contextual output for the information, the word segment. The structured contextual output further includes a structural output comprising the data field and the value for the data field. The structured contextual output further includes a start and end timestamp for the word segment.

Specifically, for each data field of the form 114, a value is determined from a word segment, and the timestamps of the word segment are assigned. In this example, for a first data field "first name" the first structured contextual output 372 is determined. The first structured contextual output 372 includes the data field "first name", value "Tom", and the word segment information (here, "sentence_info" comprising the words spoken "sentence_spoken", and the assigned start and end timestamp"). A second structured contextual output 374 for a second data field is also depicted. Structured contextual output 374 includes the data field "last name", value "Parker", and the word segment information (here, "sentence_info" comprising the words spoken "sentence_spoken", and the assigned start and end timestamp"). In this example, the word segment of the first structural contextual output 372 and the second structural contextual output 374 is the same word segment, although associated with two different data fields, and two different values. This is because in some cases, a word segment conveys information for two different data fields.

The third structured contextual output 376 includes the data field "address", value "233 Monterey Road, San Jose, 95125", and the word segment information. A fourth structured contextual output 378 for a fourth data field is also depicted. Structured contextual output 378 includes the data field "dependents", value "3", and the word segment. Similar to the first structured contextual output 372 and the second structured contextual output 374, the third structured contextual output 376 and the fourth structured contextual output 378 share a word segment because the word segment conveys information associated with two data fields.

Returning to **FIG. 2****,** at step 224, the form 114 is populated with the values from the structured contextual outputs. For example, the data field "first name", is populated with the value "Tom"; the "last name" data field is populated with the value "Parker"; the data field "address" is populated with the value "233 Monterey Road, San Jose, 95125"; and the data field "dependents", is populated with the value "3. In some examples, populating the form may include updating an existing value for the data field to the value from the structured contextual outputs. In some cases, the existing value may comprise a null value, or an example value. In some cases, the existing value may be a previously entered value.

In some aspects, the form 114 may be populated based on a network call requesting the values from the structured contextual outputs, and returning the values to the user interface to populate the form 114.

In some aspects, a data field where no value is determined from the audio data 202, for example, where the audio data 202 does not contain information relevant to the data field, or where the machine learning model 132(2) is unable to make a value determination, the data field is not populated. For example, an existing value may not be updated, a value may be assigned as a null value or example value, or no value may be populated where a value is not mapped to the data field. In another example, an error value may be populated or no value may be entered into form 114.

In some aspects, a data field where no value is determined form the audio data 202, the value may be populated by the user, for example, through a user entering the value into the form 114 through the user interface.

Optionally, at step 226, an audio segment corresponding to each value is generated based on the assigned timestamps for the word segment associated with the value. For example, based on the timestamps of the structured contextual output, an audio segment may be generated comprising the portion of the audio data 202 between the start timestamps of the first word of the word segment and the end timestamp of the last word of the word segment.

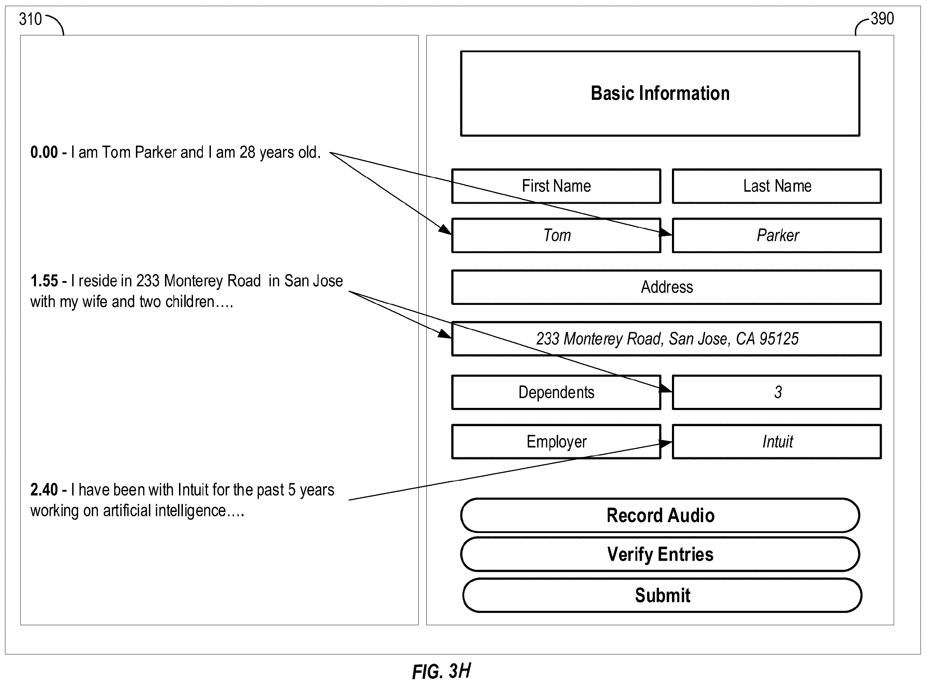

**FIG. 3H** depicts an example filled form 390 based on the audio data 300. In **FIG. 3H****,** a segment of the audio data containing the word segment for populating each data field is shown. For example, the data field "first name", is populated with the value "Tom" and is based on the audio segment "I am Tom Parker and I am 28 years old" of the audio data 300. The "last name" data field is populated with the value "Parker" and is also based on the audio segment "I am Tom Parker and I am 28 years old" of the audio data 300. The data field "address" is populated with the value "233 Monterey Road, San Jose, 95125" and is based on the audio segment "I reside in 233 Monterey Road in San Jose with my wife and two children" of the audio data 300. The data field "dependents" is populated with the value "3, and is also based on the audio segment "I reside in 233 Monterey Road in San Jose with my wife and two children." The data field "employer" is populated with "Intuit" and is based on the audio segment "I have been with Intuit for the past 5 years working on artificial intelligence..." of the audio data 300.

Returning to **FIG. 2****,** optionally, workflow 200 continues at step 228 with verifying the value of the data field based on the audio segment. For example, for the "first name" data field of **FIG. 3H****,** the value of "Tom" may be verified by playing, e.g., through an audio player, the audio segment comprising the word segment "I am Tom Parker and I am 28 years old."

Note that **FIG. 2** is just examples of a workflow, and other workflows including fewer, additional, or alternative operations are possible consistent with this disclosure.

### Example Method for Audio Data based Form Population

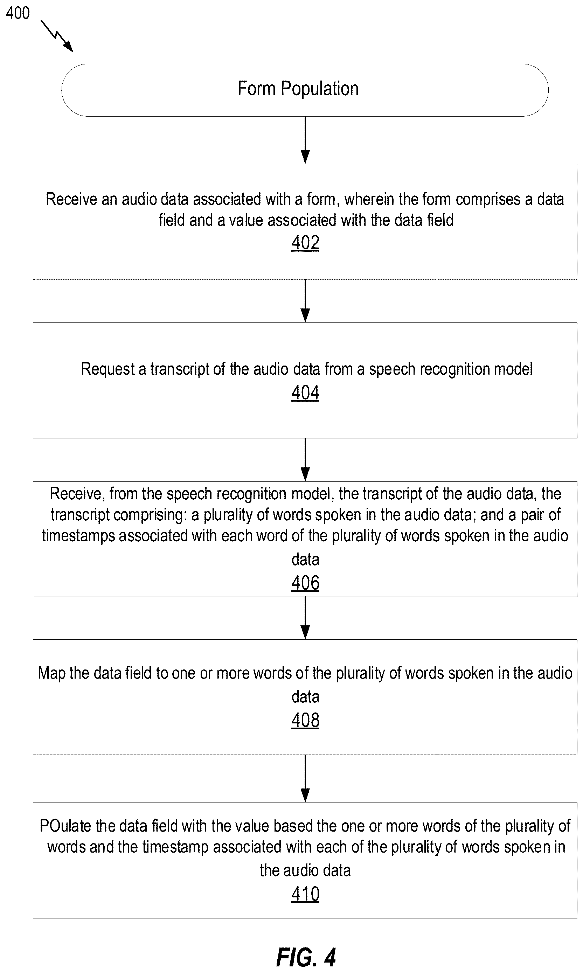

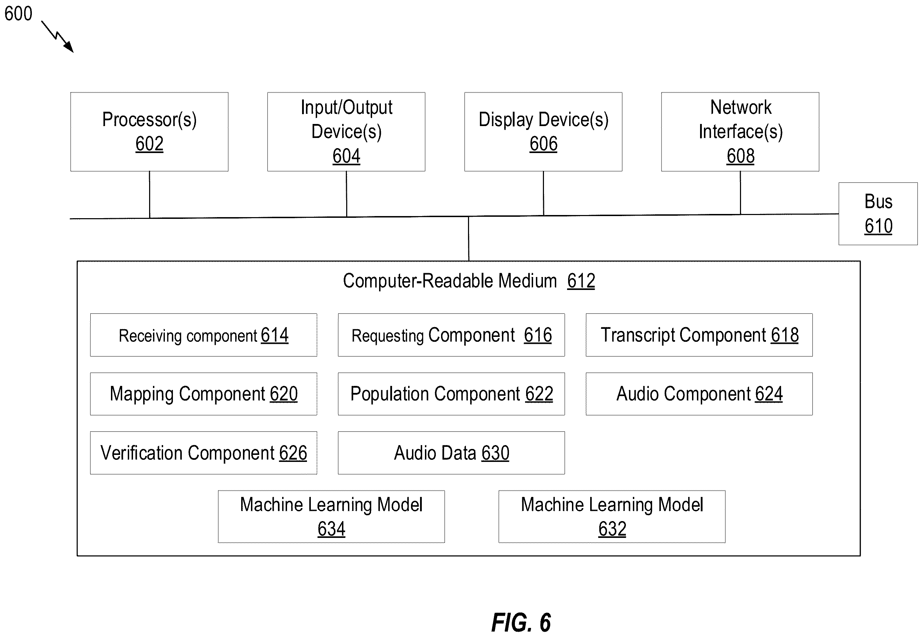

**FIG. 4** depicts an example method 400 for audio-based form population. In one aspect, method 400 can be implemented by the system 100 of **FIG. 1** and/or processing system 600 of **FIG.** 6.

Initially, method 400 starts at block 402 with receiving an audio data associated with a form, wherein the form comprises a data field and a value associated with the data field, such as described with respect to step 204 of **FIG. 2****.** In some aspects, the data field is for an electronic form, the value is a data entry for the electronic form, and the method further comprises outputting the electronic form. In some aspects, the audio data comprises a video data.

Method 400 continues to block 404 with requesting a transcript of the audio data from a speech recognition model, such as described with respect to step 206 of **FIG. 2****.**

Method 400 continues at block 406 with receiving, from the speech recognition model, the transcript of the audio data, the transcript comprising: a plurality of words spoken in the audio data; and a pair of timestamps associated with each word of the plurality of words spoken in the audio data, such as described with respect to step 206 of **FIG. 2****.**

Method 400 continues at block 408 with mapping the data field to one or more words of the plurality of words spoken in the audio data, such as described with respect to step 214 of **FIG. 2****.**

In some aspects, mapping the data field to the one or more words of the plurality of words spoken in the audio data, comprises: constructing a word segment comprising the one or more words of the plurality of words spoken in the audio data; determining the word segment comprises information related to the data field; and assigning a start timestamp for a first word of the word segment and an end timestamp for a last word of the word segment.

In some aspects, constructing the word segment comprising the one or more words of the plurality of words spoken in the audio data, comprises: requesting, from a first machine learning model, a contextual output identifying related words of the transcript; and receiving, from the first machine learning model, the contextual output comprising the word segment, such as described with respect to step 216 of **FIG. 2****.**

In some aspects, determining the word segment comprises information related to the data field, comprises: selecting a schema associated with the form wherein the schema indicates one or more possible values for the data field; and requesting, from a second machine learning model, a structured output comprising the value for the data field based on the schema and the word segment; and receiving, from the second machine learning model, the structured output, such as described with respect to step 218 of **FIG. 2****.**

In some aspects, the first machine learning model and the second machine learning model are the same machine learning model; the same machine learning model comprises a language model.

In some aspects, assigning the start timestamp for the first word of the word segment and the end timestamp for the last word of the word segment, comprises identifying the first word of the word segment in the transcript; assigning the start timestamp to a timestamp associated with the first word of the word segment in the transcript; identifying the last word of the word segment in the transcript; and assigning the end timestamp to a timestamp associated with the last word of the word segment in the transcript, such as described with respect to step 220 of **FIG. 2****.**

Method 400 continues at block 410 with populating the data field with the value based the one or more words of the plurality of words and the timestamp associated with each of the plurality of words spoken in the audio data, such as described with respect to step 224 of **FIG. 2****.**

In some aspects, method 400 includes generating an audio segment associated with the data field, wherein the audio segment comprises a portion of the audio data comprising the one or more words of the plurality of words spoken in the audio data mapped to the data field, such as described with respect to step 226 of **FIG. 2****.**

In some aspects, method 400 includes verifying the value based on the audio segment, such as described with respect to step 228 of **FIG. 2****.**

Note that **FIG. 4** is just one example of a method, and other methods including fewer, additional, or alternative operations are possible consistent with this disclosure.

### Example Method for Audio Based Form Population and Verification

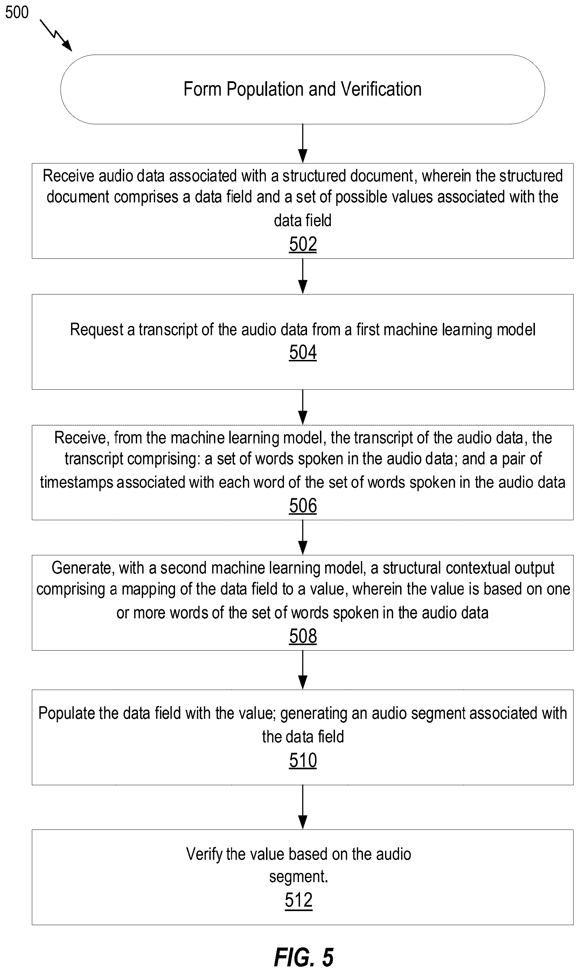

**FIG. 5** depicts an example method 500 for audio-based form population and verification. In one aspect, method 500 can be implemented by the system 100 of **FIG. 1** and/or processing system 600 of **FIG. 6****.**

Method 500 begins at block 502 with receiving audio data associated with a structured document, wherein the structured document comprises a data field and a set of possible values associated with the data field, such as described with respect to step 204 of **FIG. 2****.** In some aspects, the data field is for an electronic form, the value is a data entry for the electronic form, and the method further comprises outputting the electronic form. In some aspects, the audio data comprises a video data.

Method 500 continues at block 504 with requesting a transcript of the audio data from a first machine learning model, such as described with respect to step 206 of **FIG. 2****.**

Method 500 continues at block 506 with receiving, from the first machine learning model, the transcript of the audio data, the transcript comprising: a set of words spoken in the audio data; and a pair of timestamps associated with each word of the set of words spoken in the audio data, such as described with respect to step 206 of **FIG. 2****.**

Method 500 continues at block 508 with generating, with a second machine learning model, a structural contextual output comprising a mapping of the data field to a value, wherein the value is based on one or more words of the set of words spoken in the audio data, such as described with respect to step 214 of **FIG. 2****.**

The method of clause 11, wherein generating, with the second machine learning model, the structural contextual output comprising the mapping of the data field to the value, comprises: constructing a word segment comprising the one or more words of the set of words spoken in the audio data with the second machine learning model; determining the word segment comprises information related to the data field with the second machine learning model; and assigning a start timestamp for a first word of the word segment and an end timestamp for a last word of the word segment.

The method of clause 12, wherein constructing the word segment comprising the one or more words of the set of words spoken in the audio data with the second machine learning model comprises: prompting the second machine learning model to identifying related words of the transcript; and receiving, from the second machine learning model, the word segment, such as described with respect to step 216 of **FIG. 2****.**

The method of any one of clauses 12-13, wherein determining the word segment comprises information related to the data field with the second machine learning model, comprises: selecting a schema associated with the structured document wherein the schema indicates the set of possible values for the data field; and requesting, from the second machine learning model, the value for the data field based on the schema and the word segment; and receiving, from the second machine learning model, the value for the data field inferred from the word segment, such as described with respect to step 218 of **FIG. 2****.**

The method of any one of clauses 12-14, wherein assigning the start timestamp for the first word of the word segment and the end timestamp for the last word of the word segment, comprises identifying the first word of the word segment in the transcript; assigning the start timestamp to a timestamp associated with the first word of the word segment in the transcript; identifying the last word of the word segment in the transcript; and assigning the end timestamp to a timestamp associated with the last word of the word segment in the transcript, such as described with respect to step 220 of **FIG. 2****.**

Method 500 continues at block 510 with populating the data field with the value; generating an audio segment associated with the data field; and

Method 500 continues at block 512 with verifying the value based on the audio segment.

In some aspects, the first machine learning model comprises a speech recognition mode; and the second machine learning model comprises a language model.

Note that **FIG. 5** is just one example of a method, and other methods including fewer, additional, or alternative operations are possible consistent with this disclosure.

### Example Processing System for Audio Data based Form Population

**FIG. 6** depicts an example processing system 600 configured to perform various aspects described herein, including, for example, method 400 as described above with respect to **FIG. 4****,** or method 500 described above with respect to **FIG. 5****.**

Processing system 600 is generally an example of an electronic device configured to execute computer-executable instructions, such as those derived from compiled computer code, including without limitation personal computers, tablet computers, servers, smart phones, smart devices, wearable devices, augmented and/or virtual reality devices, and others.

In the depicted example, processing system 600 includes one or more processors 602, one or more input/output devices 604, one or more display devices 606, one or more network interfaces 608 through which processing system 600 is connected to one or more networks (e.g., a local network, an intranet, the Internet, or any other group of processing systems communicatively connected to each other), and computer-readable medium 612. In the depicted example, the aforementioned components are coupled by a bus 610, which may generally be configured for data exchange amongst the components. Bus 610 may be representative of multiple buses, while only one is depicted for simplicity.

Processor(s) 602 are generally configured to retrieve and execute instructions stored in one or more memories, including local memories like computer-readable medium 612, as well as remote memories and data stores. Similarly, processor(s) 602 are configured to store application data residing in local memories like the computer-readable medium 612, as well as remote memories and data stores. More generally, bus 610 is configured to transmit programming instructions and application data among the processor(s) 602, display device(s) 606, network interface(s) 608, and/or computer-readable medium 612. In certain embodiments, processor(s) 602 are representative of a one or more central processing units (CPUs), graphics processing unit (GPUs), tensor processing unit (TPUs), accelerators, and other processing devices.

Input/output device(s) 604 may include any device, mechanism, system, interactive display, and/or various other hardware and software components for communicating information between processing system 600 and a user of processing system 600. For example, input/output device(s) 604 may include input hardware, such as a keyboard, touch screen, button, microphone, speaker, and/or other device for receiving inputs from the user and sending outputs to the user.

Display device(s) 606 may generally include any sort of device configured to display data, information, graphics, user interface elements, and the like to a user. For example, display device(s) 606 may include internal and external displays such as an internal display of a tablet computer or an external display for a server computer or a projector. Display device(s) 606 may further include displays for devices, such as augmented, virtual, and/or extended reality devices. In various embodiments, display device(s) 606 may be configured to display a graphical user interface.

Network interface(s) 608 provide processing system 600 with access to external networks and thereby to external processing systems. Network interface(s) 608 can generally be any hardware and/or software capable of transmitting and/or receiving data via a wired or wireless network connection. Accordingly, network interface(s) 608 can include a communication transceiver for sending and/or receiving any wired and/or wireless communication.

Computer-readable medium 612 may be a volatile memory, such as a random access memory (RAM), or a nonvolatile memory, such as nonvolatile random access memory (NVRAM), or the like. In this example, computer-readable medium 612 includes receiving component 614, requesting component 616, transcript component 618, mapping component 620, form population component 622, audio component 624, verification component 626, storage 630, first machine learning model 632, and second machine learning model 634.

In certain aspects, receiving component 614 is configured to receive an audio data associated with a form, such as described with respect to step 204 of **FIG. 2****,** block 402 of **FIG. 4****,** and/or block 502 of **FIG. 5****.** In some aspects, the data field is for an electronic form, the value is a data entry for the electronic form, and the method further comprises outputting the electronic form. In some aspects, the audio data comprises a video data. Audio data may be stored in storage 630.

In certain aspects, requesting component 616 is configured to request a transcript of the audio data from a first machine learning model 632, which may be a speech recognition model, such as described with respect to step 206 of **FIG. 2****,** block 404 of **FIG. 4****,** and/or block 504 of **FIG. 5****.**

In certain aspects, transcript component 618 is configured to receive, from the speech recognition model, the transcript of the audio data, the transcript comprising: a plurality of words spoken in the audio data; and a pair of timestamps associated with each word of the plurality of words spoken in the audio data, such as described with respect to step 206 of **FIG. 2****,** block 406 of **FIG. 4****,** and/or block 506 of **FIG. 5****.**

In certain aspects, mapping component 620 is configured to generate with a second machine learning model 634, a structural contextual output comprising a mapping of the data field to a value, wherein the value is based on one or more words of the set of words spoken in the audio data, such as described with respect to step 214 of **FIG. 2** and/or block 508 of **FIG. 5****.** In certain aspects, mapping component 620 is configured to mapping the data field to one or more words of the plurality of words spoken in the audio data, such as described with respect to step 214 of **FIG. 2****,** and/or block 408 of **FIG. 4****.**

In certain aspects, form population component 622 is configured to populate the data field with the value based the one or more words of the plurality of words and the timestamp associated with each of the plurality of words spoken in the audio data, such as described with respect to step 224 of **FIG. 2****,** block 410 of **FIG. 4****,** and/or block 510 of **FIG. 5****.**

In certain aspects, audio component 624 generate an audio segment associated with the data field, wherein the audio segment comprises a portion of the audio data comprising the one or more words of the plurality of words spoken in the audio data mapped to the data field, such as described with respect to step 226 of **FIG. 2****,** method 400 of **FIG. 4****,** and/or block 512 of **FIG. 5****.**

In certain aspects, verification component 626 is configured to verify the value based on the audio segment, such as described with respect to step 228 of **FIG. 2****,** method 400 of **FIG. 4****,** and/or block 514 of **FIG. 5****.**

Note that **FIG. 6** is just one example of a processing system consistent with aspects described herein, and other processing systems having additional, alternative, or fewer components are possible consistent with this disclosure.

Therefore, from one perspective, there have been described systems and methods for audio-based form population and verification. Aspects include requesting and receiving a transcript of audio data associated with a form with a data field and a value associated with the data field, from a speech recognition model, wherein the transcript comprises the words spoken in the audio data; and a pair of timestamps associated with each word spoken in the audio data. Then, the data field is mapped to one or more words spoken in the audio data and used to populate the data field with the value.

### Example Clauses

Implementation examples are described in the following numbered clauses:
Clause 1: A method, comprising: receiving an audio data associated with a form, wherein the form comprises a data field and a value associated with the data field; requesting a transcript of the audio data from a speech recognition model; receiving, from the speech recognition model, the transcript of the audio data, the transcript comprising: a plurality of words spoken in the audio data; and a pair of timestamps associated with each word of the plurality of words spoken in the audio data; mapping the data field to one or more words of the plurality of words spoken in the audio data; and populating the data field with the value based the one or more words of the plurality of words and the timestamp associated with each of the plurality of words spoken in the audio data.
Clause 2: The method of clause 1, further comprising generating an audio segment associated with the data field, wherein the audio segment comprises a portion of the audio data comprising the one or more words of the plurality of words spoken in the audio data mapped to the data field.
Clause 3: The method of any one of clauses 1 - 2, further comprising verifying the value based on the audio segment.
Clause 4: The method of any one of clauses 1 - 3, wherein mapping the data field to the one or more words of the plurality of words spoken in the audio data, comprises: constructing a word segment comprising the one or more words of the plurality of words spoken in the audio data; determining the word segment comprises information related to the data field; and assigning a start timestamp for a first word of the word segment and an end timestamp for a last word of the word segment.
Clause 5: The method of clause 4, wherein constructing the word segment comprising the one or more words of the plurality of words spoken in the audio data, comprises: requesting, from a first machine learning model, a contextual output identifying related words of the transcript; and receiving, from the first machine learning model, the contextual output comprising the word segment.
Clause 6: The method of any one of clauses 4 - 5, wherein determining the word segment comprises information related to the data field, comprises: selecting a schema associated with the form wherein the schema indicates one or more possible values for the data field; and requesting, from a second machine learning model, a structured output comprising the value for the data field based on the schema and the word segment; and receiving, from the second machine learning model, the structured output.
Clause 7: The method of clause 6, wherein the first machine learning model and the second machine learning model are the same machine learning model; the same machine learning model comprises a language model.
Clause 8: The method of any one of clauses 4-7, wherein assigning the start timestamp for the first word of the word segment and the end timestamp for the last word of the word segment, comprises identifying the first word of the word segment in the transcript; assigning the start timestamp to a timestamp associated with the first word of the word segment in the transcript; identifying the last word of the word segment in the transcript; and assigning the end timestamp to a timestamp associated with the last word of the word segment in the transcript.
Clause 9: The method of any one of clauses 1 - 8 wherein: the data field is for an electronic form, the value is a data entry for the electronic form, and the method further comprises outputting the electronic form.
Clause 10: The method of any one of clauses 1 - 9, wherein the audio data comprises a video data.
Clause 11: A method, comprising: receiving audio data associated with a structured document, wherein the structured document comprises a data field and a set of possible values associated with the data field; requesting a transcript of the audio data from a first machine learning model; receiving, from the machine learning model, the transcript of the audio data, the transcript comprising: a set of words spoken in the audio data; and a pair of timestamps associated with each word of the set of words spoken in the audio data; generating, with a second machine learning model, a structural contextual output comprising a mapping of the data field to a value, wherein the value is based on one or more words of the set of words spoken in the audio data; populating the data field with the value; generating an audio segment associated with the data field; and verifying the value based on the audio segment.
Clause 12: The method of clause 11, wherein generating, with the second machine learning model, the structural contextual output comprising the mapping of the data field to the value, comprises: constructing a word segment comprising the one or more words of the set of words spoken in the audio data with the second machine learning model; determining the word segment comprises information related to the data field with the second machine learning model; and assigning a start timestamp for a first word of the word segment and an end timestamp for a last word of the word segment.
Clause 13: The method of clause 12, wherein constructing the word segment comprising the one or more words of the set of words spoken in the audio data with the second machine learning model comprises: prompting the second machine learning model to identifying related words of the transcript; and receiving, from the second machine learning model, the word segment.
Clause 14: The method of any one of clauses 12-13, wherein determining the word segment comprises information related to the data field with the second machine learning model, comprises: selecting a schema associated with the structured document wherein the schema indicates the set of possible values for the data field; and requesting, from the second machine learning model, the value for the data field based on the schema and the word segment; and receiving, from the second machine learning model, the value for the data field inferred from the word segment.
Clause 15: The method of any one of clauses 12-14, wherein assigning the start timestamp for the first word of the word segment and the end timestamp for the last word of the word segment, comprises identifying the first word of the word segment in the transcript; assigning the start timestamp to a timestamp associated with the first word of the word segment in the transcript; identifying the last word of the word segment in the transcript; and assigning the end timestamp to a timestamp associated with the last word of the word segment in the transcript.
Clause 16: The method of any one of clauses 11- 15, wherein: the first machine learning model comprises a speech recognition mode; and the second machine learning model comprises a language model.
Clause 17: A processing system, comprising: a memory comprising computer-executable instructions; and a processor configured to execute the computer-executable instructions and cause the processing system to: receive an audio data associated with a form, wherein the form comprises a data field and a value associated with the data field; request a transcript of the audio data from a speech recognition model; receive, from the speech recognition model, the transcript of the audio data, the transcript comprising: a plurality of words spoken in the audio data; and a pair of timestamps associated with each word of the plurality of words spoken in the audio data; map the data field to one or more words of the plurality of words spoken in the audio data; and populate the data field with the value based the one or more words of the plurality of words and the timestamp associated with each of the plurality of words spoken in the audio data.
Clause 18: The processing system of clause 17, wherein the processor is further configured to cause the processing system to: generate an audio segment associated with the data field, wherein the audio segment comprises a portion of the audio data comprising the one or more words of the plurality of words spoken in the audio data mapped to the data field; and verify the value based on the audio segment.
Clause 19: The processing system of clause 17 or 18, wherein to map the data field to the one or more words of the plurality of words spoken in the audio data the processor is further configured to cause the processing system to: construct a word segment comprising the one or more words of the plurality of words spoken in the audio data; determine the word segment comprises information related to the data field; and assign a start timestamp for a first word of the word segment and an end timestamp for a last word of the word segment.
Clause 20: The processing system of clause 17, 18 or 19, the data field is for an electronic form, the value is a data entry for the electronic form, and the processor is further configured to cause the processing system to output the electronic form.
Clause 21: A processing system, comprising: a memory comprising computer-executable instructions; and a processor configured to execute the computer-executable instructions and cause the processing system to perform a method in accordance with any one of Clauses 1-16.
Clause 22: A processing system, comprising means for performing a method in accordance with any one of Clauses 1-16.
Clause 23: A computer-readable medium comprising program code for causing a processing system to perform the steps of any one of Clauses 1-16.
Clause 24: A computer program product embodied on a computer-readable storage medium comprising code for performing a method in accordance with any one of Clauses 1-16.

### Additional Considerations

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As described above, the methods, techniques and systems disclosed herein may be provided by way of instructions executable by one or more programmable processors of computing apparatus. Such instructions may be provided using a computer-readable medium encoded with the instructions. A computer readable medium may be a computer-readable storage medium storing the instructions. Such a computer-readable storage medium may be referred to as a nontransitory computer-readable medium. Examples of a computer-readable storage medium may include a CD, a DVD, a storage device, a diskette, a tape, flash memory, physical memory, or any other computer-readable storage medium. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A method, comprising:
receiving an audio data associated with a form, wherein the form comprises a data field and a value associated with the data field;
requesting a transcript of the audio data from a speech recognition model;
receiving, from the speech recognition model, the transcript of the audio data, the transcript comprising:
a plurality of words spoken in the audio data; and
a pair of timestamps associated with each word of the plurality of words spoken in the audio data;
mapping the data field to one or more words of the plurality of words spoken in the audio data; and
populating the data field with the value based the one or more words of the plurality of words and the timestamp associated with each of the plurality of words spoken in the audio data.

2. The method of claim 1, further comprising:
generating an audio segment associated with the data field,
wherein the audio segment comprises a portion of the audio data comprising the one or more words of the plurality of words spoken in the audio data mapped to the data field.

3. The method of claim 2, further comprising verifying the value based on the audio segment.

4. The method of claim 1, 2 or 3, wherein mapping the data field to the one or more words of the plurality of words spoken in the audio data, comprises:
constructing a word segment comprising the one or more words of the plurality of words spoken in the audio data;
determining the word segment comprises information related to the data field; and
assigning a start timestamp for a first word of the word segment and an end timestamp for a last word of the word segment.

5. The method of claim 4, wherein constructing the word segment comprising the one or more words of the plurality of words spoken in the audio data, comprises:
requesting, from a first machine learning model, a contextual output identifying related words of the transcript; and
receiving, from the first machine learning model, the contextual output comprising the word segment.

6. The method of claim 4 or 5, wherein determining the word segment comprises information related to the data field, comprises:
selecting a schema associated with the form wherein the schema indicates one or more possible values for the data field; and
requesting, from a second machine learning model, a structured output comprising the value for the data field based on the schema and the word segment; and
receiving, from the second machine learning model, the structured output;
wherein, for example, the first machine learning model and the second machine learning model are the same machine learning model, and the same machine learning model comprises a language model.

7. The method of any of claims 4-6, wherein assigning the start timestamp for the first word of the word segment and the end timestamp for the last word of the word segment, comprises
identifying the first word of the word segment in the transcript;
assigning the start timestamp to a timestamp associated with the first word of the word segment in the transcript;
identifying the last word of the word segment in the transcript; and
assigning the end timestamp to a timestamp associated with the last word of the word segment in the transcript.

8. The method of any preceding claim, wherein:
the data field is for an electronic form, the value is a data entry for the electronic form, and the method further comprises outputting the electronic form; and/or
the audio data comprises a video data.

9. A method, comprising:
receiving audio data associated with a structured document, wherein the structured document comprises a data field and a set of possible values associated with the data field;
requesting a transcript of the audio data from a first machine learning model;
receiving, from the machine learning model, the transcript of the audio data, the transcript comprising:
a set of words spoken in the audio data; and
a pair of timestamps associated with each word of the set of words spoken in the audio data;
generating, with a second machine learning model, a structural contextual output comprising a mapping of the data field to a value, wherein the value is based on one or more words of the set of words spoken in the audio data;
populating the data field with the value;
generating an audio segment associated with the data field; and
verifying the value based on the audio segment.

10. The method of claim 9, wherein generating, with the second machine learning model, the structural contextual output comprising the mapping of the data field to the value, comprises:
constructing a word segment comprising one or more words of the set of words spoken in the audio data with the second machine learning model;
determining the word segment comprises information related to the data field with the second machine learning model; and
assigning a start timestamp for a first word of the word segment and an end timestamp for a last word of the word segment.

11. The method of claim 10, wherein constructing the word segment comprising the one or more words of the set of words spoken in the audio data with the second machine learning model comprises:
prompting the second machine learning model to identifying related words of the transcript; and
receiving, from the second machine learning model, the word segment.

12. The method of claim 10 or 11, wherein determining the word segment comprises information related to the data field with the second machine learning model, comprises:
selecting a schema associated with the structured document wherein the schema indicates the set of possible values for the data field; and
requesting, from the second machine learning model, the value for the data field based on the schema and the word segment; and
receiving, from the second machine learning model, the value for the data field inferred from the word segment.

13. The method of claim 10, 11 or 12, wherein assigning the start timestamp for the first word of the word segment and the end timestamp for the last word of the word segment, comprises:
identifying the first word of the word segment in the transcript;
assigning the start timestamp to a timestamp associated with the first word of the word segment in the transcript;
identifying the last word of the word segment in the transcript; and
assigning the end timestamp to a timestamp associated with the last word of the word segment in the transcript.

14. The method of any of claims 9-13, wherein:
the first machine learning model comprises a speech recognition mode; and
the second machine learning model comprises a language model.

15. A processing system, comprising: a memory comprising computer-executable instructions; and a processor configured to execute the computer-executable instructions and cause the processing system to perform the method of any preceding claim.
